# EUROPEAN PATENT APPLICATION

(11) **EP 1 313 253 A1**
(43) Date of publication of application: **21.05.2003**
(21) Application number: 01440387.7
(22) Date of filing: 15.11.2001
(51) Int. Cl.: H04L 1/20

(54) **Method for detecting errors in a real-time data entity comprising at least two bit portions having different relevance and corresponding receiver**

(71) Applicant: Evolium S.A.S., 75008 Paris (FR)
(72) Inventor: Brouet, Jérome, F-75014 Paris (FR); Tirouard, Carine, F-91190 Gif Sur Yvette (FR); Paul, Nicolas, F-75002 Paris (FR)
(74) Representative: Urlichs, Stefan, Dipl.-Phys.

(57) **Abstract**

The present invention relates to a method for detecting errors in a real-time data entity received at a receiver of a radio communication network, the real-time data entity being transported in a radio block over a radio channel, the real time data frame comprising at least two bit portions having different relevance.

According to the present invention, the method comprises the steps of:
i estimating a first bit error rate for a first bit portion;
ii checking if the first estimated bit error rate is higher than a first predefined threshold,
iii estimating a second bit error rate for a second bit portion having a lower relevance than the first bit portion;
iv checking if the second estimated bit error rate is higher than a second predefined threshold higher than the first predefined threshold,
v replacing the entire real-time data entity by using a concealment algortihm if one of the checks is true.

## Description

### BACKGROUND OF THE INVENTION

The present invention relates to radio communication networks and more precisely to a method for detecting errors in a real-time data entity as compressed voice or compressed video at a receiver of such networks.

Radio packet communication networks, such as GPRS (General Packet Radio Services) or EDGE (Enhanced Data rate for GSM Evolution) networks, at the origin thought for the transmission of pure data, have been adapted to the transmission of real time services as voice services.

In radio packet communications networks, no physical connection is established for the whole duration of the conversation as in circuit oriented radio communication network as GSM, where fixed time slots are allocated in each frame for each user.

On the contrary, in radio packet communications networks, specific medium access mechanisms control dynamically the allocation of resource (i.e. time slot in a frame and frequency) to the different users depending on their needs.

This presents the advantage of a higher network capacity. Indeed, when users have nothing to transmit other users can be allocated the transmission medium. On the other hand, however, specific additional features must be implemented to comply with the specificity of voice and video services.

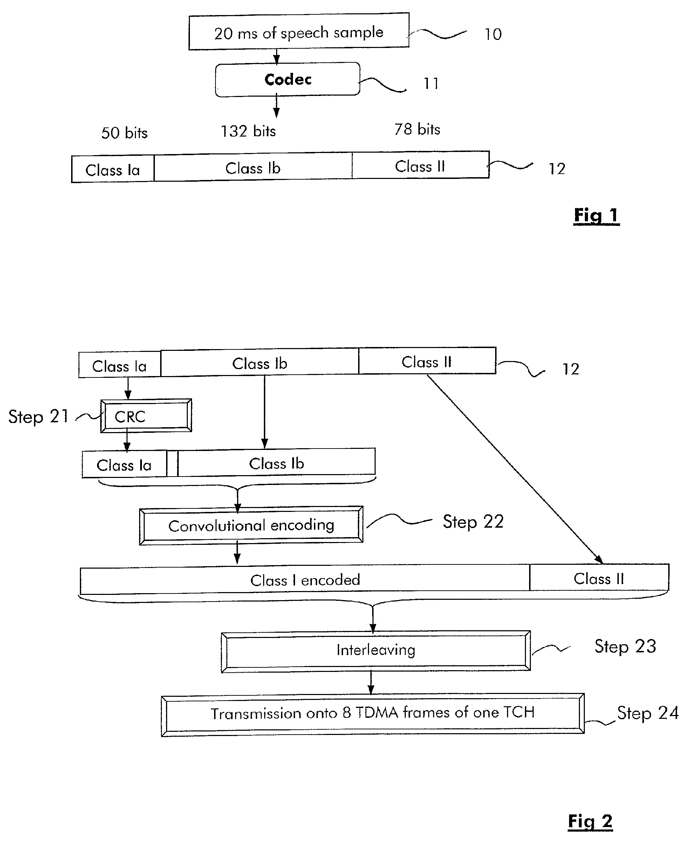

One of this specificity consists in that the voice frame at the output of a voice codec comprises bits having different relevance. As shown on figure 1, a 20 ms speech sample 10 is encoded by using a voice codec 11 usually a GSM full rate codec (13Kbps) compliant with the specification GSM TS 06.10. A voice frame 12 is obtained at the output of codec 11 and comprises 260 bits divided in three bit portions: 50 class A bits, 132 class B bits and 78 class C bits. The different bit portions are also referred as Class Ia, Class Ib and Class II respectively in the GSM context. Class A and B bits are the most relevant bits describing the voice frame. The correct reception of class A bits is essential to reconstruct the voice frame at the receiver side while errors on class B and class C bits can be tolerated.

A solution implemented in usual GSM circuit oriented networks is presented on figure 2. It takes into account the different relevance of the different classes of bits, while not increasing too much the redundancy, and consists in applying unequal error protections to the different portions class A, Class B, Class C of the voice frame 12. Unequal error protection consists in protecting more the class A and B than the class C bits. The class A and B bits as for this purpose submitted to a convolutional encoding (step 22) while the class C are sent without any protection. To protect class A bits even more and ensure error detection at the receiver in case of propagation errors on the radio link, a checksum CRC is appended (step 21) at the end of the class A bits. Then, interleaving (step 23) is performed to maximize decoding capability on the convolutional decoder at the receiver side and the resulting TDMA frames are modulated and transmitted on a radio communication channel (step 24) i.e. a traffic channel TCH.

US patent 5,502,713 discloses a method for detecting erroneous frames by means of a CRC check performed on class A bit portions. An erroneous frame is substituted using an error concealment method. The type of concealment method used depends on a probability of error measured in the erroneous frame. For high probability of error, more weight is given to the previous frame in the concealment method.

Alternatively, real-time data entities may also be transported on radio packet communication networks as GPRS or EDGE designed for the transport of data where each bit has similar importance. Hence, on a packet radio channel of such radio packet communication network, each bit is equally protected. As a consequence, class A bits are not enough protected while Class C bits are over protected. This, has the disadvantage to cause a degradation of the voice quality in such radio communication networks. If a protection adapted to the requirements of class A bits is used for the whole voice frame, the voice quality will be ensured but the redundancy due to the high overhead of the protection will cause very poor performance of the system.

In such a system, a known method for detecting erroneous frame consists in performing a CRC check on the whole frame. The detected erroneous frames are substituted with usual concealment methods. This detection method is not efficient since a bit error whatever the relevance of this bit implies the detection of an erroneous frame.

A particular object of the present invention is to provide a method for detecting errors in real-time data entity (e.g. voice frame, video frame) at a receiver of a radio communication network while optimizing the performances of the system in terms of data redundancy and of processing time.

Another object of the invention is to provide a receiver adapted to detect end correct errors in according to the present invention.

### SUMMARY OF THE INVENTION

These objects, and others that appear below, are achieved by a method for detecting errors in a real time-data entity comprising different bit portions according to claim 1 and a receiver according to claim 7.

According to the present invention, a bit error rate is estimated for a first portion of the real-time data frame and for a second bit portion of the data frame having a lower relevance than the first bit portion. Then, the estimated bit error rates are checked against a threshold, the bit error rate estimated for the first bit portion being checked against a first threshold and the bit error rate estimated for the second bit portion being checked against a second threshold higher than the first threshold. If one bit error rate is higher than its corresponding threshold, the entire real-time data entity is replaced according to a concealment method.

In a preferred embodiment of the present invention, the method can be applied to a radio packet communication network where equal error protection is used for transmitting real-time data entities.

The method according to the present invention presents the advantage to increase the quality of the transmitted real-time data perceived by the end-user while selectively checking the quality of the different bit portions thanks to a soft quality estimation (bit error rate).

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a usual method for coding speech samples with a voice codec and the format of the corresponding voice frame at the output of the codec;
- Figure 2 shows a prior art method used for transporting compressed voice in a circuit-oriented radio communication network using unequal error protection;
- Figure 3 illustrates a method for detecting errors in a real-time data entity at a receiver of a radio communication network according to the present invention;
- Figure 3a illustrates an example of mapping tables to determine a bit error rate estimation.
- Figure 4 represents an embodiment of a receiver according to the present invention.

### DETAILED DESCRIPTION OF THE INVENTION

Figure 1 and figure 2 have already been described in connection with prior art.

The invention will be in the following illustrated in the framework of a radio packet communication network such as GPRS or EDGE. It will however be clear for a person skilled in the art that the invention is not limited to packet switched radio communication networks but can also be used in radio communication networks based on circuit switching as GSM.

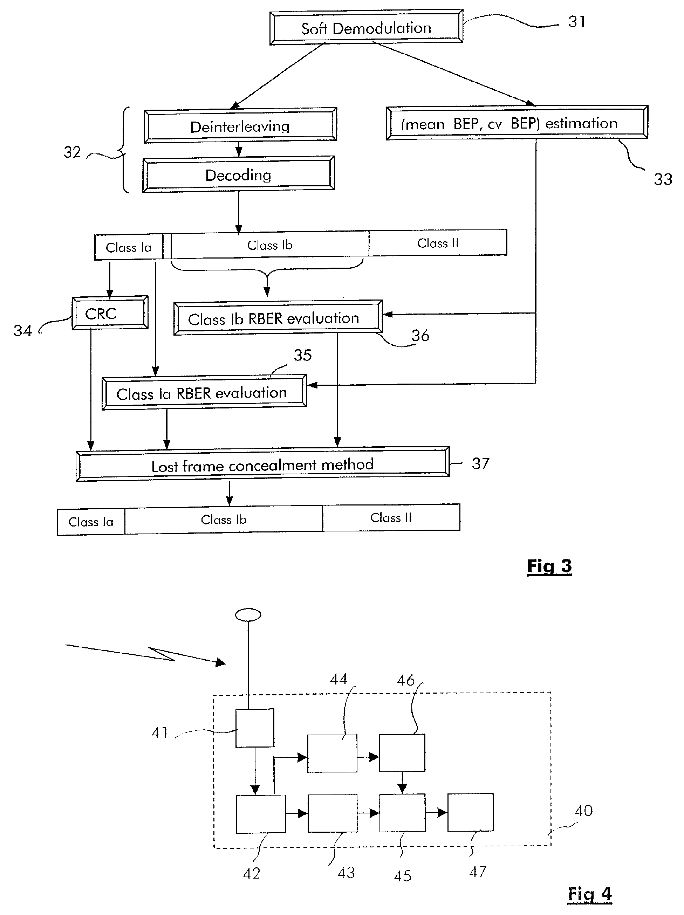

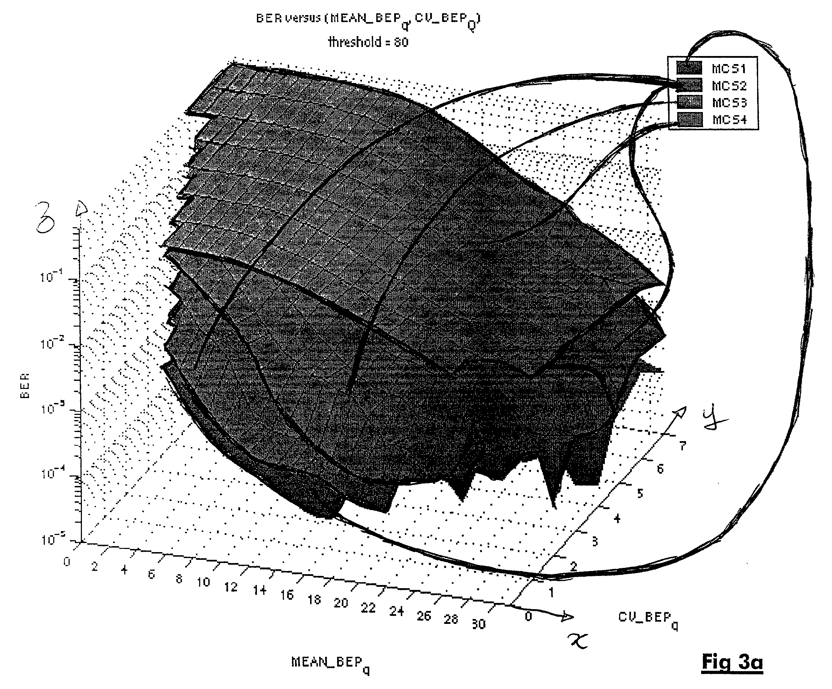

Figure 3 illustrates an embodiment of the method according to the present invention as performed at the receiver.

In this embodiment, real-time data entities consist in compressed voice, obtained as already described on figure 1. The invention is, however, not limited to the use of the method in the case of voice frames presenting three different bit portions obtained with a full rate GSM codec. It will be clear for a person skilled in the art that the embodiment of the invention described below can be applied in further cases as for example for voice frames obtained with an half rate codec or for transporting video data also coded so as to present several bit portions with different relevance. Such a codec for video can for example be compliant with the MPEG 4 format.

Figure 3 represents the method performed at the reception of one encoded and modulated radio block at the receiver, the radio block encapsulating an encoded voice frame 12 comprising three bit portions Class la, Class Ib, Class II. For this purpose, the modulation and coding scheme MCS 3 as defined in the EDGE specification may have been used.

Step 31 consists in performing demodulation with soft decision.

Step 32 consists in de-interleaving the demodulated frame and decoding it by using the appropriate demodulation scheme to obtain a decoded radio block.

In a preferred embodiment the modulation and coding schemes used at step 31 for demodulating and 32 for decoding are chosen in the group of modulation and coding schemes defined in EDGE specification.

Step 33 consists in estimating Bit Error Probability parameters from the demodulated soft bits obtained as step 31. These parameters are preferably the mean value (mean_BEP) and the standard deviation (cv_BEP) of bit error probability per burst in a soft demodulated radio block. Method for estimating these paramenters are well-known in the art.

Other parameters equivalent to mean_BEP, cv_BEP and related to the bit error probability in a soft demodulated radio block may be used for the same purpose. A possible other parameter is the carrier to interference ratio (C/I)

Step 34 consists in performing a CRC check on the Class la bit portion. This step is optional in the framework of this invention and can only be performed is a CRC field is added to the radio block in order to protect class la bit portion.

Step 35 consists in evaluating a bit error rate for the class la bit portion.

Step 36 consists in evaluating a bit error rate for the class Ib bit portion.

For obtaining bit error rates at step 35 and 36, Bit Error Probability parameters obtained at step 33 are checked against predefined mapping tables which associate a bit error rate to a bit error probability.

An example for a possible mapping table is given in figure 3a. This tree-dimensional diagram determine the bit error rate (on the z-axis) depending on the mean_BEP value (represented on the x-axis) and on the cv_BEP value (represented on the y-axis). This mapping table further depend on the modulation and coding scheme MCS used to transmit the symbols on the air interface. The mapping table has been obtained by simulation for the GMSK modulation scheme (i.e. for the modulations and coding schemes MCS1 to MCS4 as defined in the EDGE specification).

Step 37 consists in applying conditionally frame concealment to the radio block depending on the result of steps 34, 35 and 36.

The frame concealment algorithm consist in replacing the erroneous frame by a frame resulting from the combination of previously correctly received frames. Usual frame concealment algorithms are well known in the art.

If the CRC check performed at step 34 is not correct, then the whole frame concealment is executed independently on the result of steps 35 and 36.

If the CRC check is correct, conditional frame concealment depends on the result of steps 35 and 36.

If the bit error rate evaluated at step 35 is higher than a first predefined threshold or if the bit error rate evaluated at step 36 for the class Ib bit portion is higher than a second predefined threshold, the second predefined threshold being higher than the first predefined threshold, then the whole radio block (ie. Class la, class Ib and class II bit portions) is replaced by using a frame concealment method.

The first and second thresholds are preferably compatible with the reference sensitivity performance tables defined in GSM 05.05 recommendation. Possible threshold values are 0.4% for the second threshold and 0.12% for the first threshold for a Full Rate transmission ensuring a frame error rate lower or equal than 6%.

It will however be clear for a person skilled in the art that other threshold values may be used.

Figure 4 represents an embodiment of a receiver 40 according to the present invention to be used in a radio communication network. Receiver 40 comprises a module 41 for receiving data signals, a demodulator 42, a channel decoder 43, preferably a Viterbi decoder, a module 44 for estimating a bit error rate in a portion of a radio packet, a concealment module 45, a module 46 for controlling concealment module 45, and a source decoder 47.

Module 41 for receiving data signals is connected to demodulator 42. Demodulator 42 is, on the one hand, connected to channel decoder 43 itself connected to concealment module 45 followed by source decoder 47. On the other hand, demodulator 42 is connected to module 44 for estimating a bit error rate in a portion of a radio packet followed by module 46 for controlling concealment module 45.

Demodulator 42 generates soft bits which are used at module 44 for estimating a bit error rate in class la and class Ib bit portions of the radio block.

For this purpose, module 44 comprises means for estimating bit error probability parameters, preferably mean_BEP and cv_BEP and means for mapping bit error probability parameters to a bit error rate in class la and class Ib bit portions of the radio block by using predefined mapping tables as described above. As a consequence, a bit error rate is estimated for the class la bit portion and another bit error rate is estimated for the class Ib bit portion.

Module 46 for controlling concealment module 45 checks the bit error rate obtained for class la bit portion against a first threshold and bit error rate obtained for class Ib bit portion against a second threshold being higher than first threshold. The way of choosing first and second thresholds has already been addressed above in relation with the method according to the present invention.

If the bit error rate estimated for class la bit portion is higher than first threshold or if the bit error rate estimated for class Ib bit portion is higher than second threshold, module 46 for controlling concealment module 45 triggers concealment module 45 to apply error concealment to the whole radio block issued by channel decoder 43 and forward the concealed radio block to source decoder 47.

On the contrary, if the condition is not fulfilled, module 46 for controlling concealment module 45 indicates that concealment module should forward transparently the radio block issued by channel decoder 43 to source decoder 47.

Optionally, a CRC check module should be added to module 46 for controlling concealment module 45. This CRC module checks the CRC field protecting class la bits. If the CRC check is incorrect concealment module 45 is triggered to perform concealment on the whole radio block. If the CRC check is correct class la and class Ib bit portions are checked against the respective threshold in order to determine if the concealment method should be applied to the radio block issued at channel decoder 43.

## Claims

1. Method for detecting errors in a real-time data entity (12) received at a receiver (40) of a radio communication network, said real-time data entity (12) being transported in a radio block encoded and modulated with a predefined Modulation and Coding Scheme over a radio channel, said real time data frame (12) comprising at least two bit portions (Class Ia, Class Ib) having different relevance, said method being **characterized in that** it comprises the steps of:
i estimating a first bit error rate for a first bit portion;
ii checking if said first estimated bit error rate is higher than a first predefined threshold,
iii estimating a second bit error rate for a second bit portion having a lower relevance than said first bit portion;
iv checking if said second estimated bit error rate is higher than a second predefined threshold higher than said first predefined threshold,
v replacing said entire real-time data (12) entity by using a concealment algorithm if one of said checks is true.

2. Method according to claim 1, **characterized in that** said first bit portion (class la) is further protected with a Cyclic Redundancy Check, said method further comprises the step of:
- checking correctness of said CRC;
- if said CRC check is correct, performing steps i to v.

3. Method according to claim 2, further comprising the step of replacing said entire real-time data entity (12) by using a concealment method if said CRC check is not correct.

4. Method according to claim 1, **characterized in that** said bit error rate is estimated using Bit Error Probability metric.

5. Method according to claim 1, **characterized in that** said first and second thresholds are compatible with reference sensitivity performance tables defined in GSM 05.05 recommendation.

6. Method according to claim 1 used in an EDGE network, a modulation and coding scheme (MCS) being chosen in the group of modulation and coding schemes defined in EDGE specification for encoding and modulating said radio blocks, said real-time data entities being compressed voice frames issued by a GSM voice codec.

7. Receiver (40) adapted to be used for the reception of real-time data entities (12) transmitted on a radio communication network, said real time data entities (12) comprising at least two bit portions (class la, class Ib) having different relevance, said real time data entity (12) being encapsulated in a radio block encoded and modulated with a predefined modulation and coding scheme, said receiver (40) being **characterized in that** it comprises:
- a first module (44) for estimating bit error rate in a portion (class la, class Ib) of real-time data entity;
- a second module (46) for checking said estimated bit error rate against a threshold;
- a third module (46) for selecting said threshold in a group of predefined thresholds according to the relevance of said bit portion (class Ia, class Ib);
- a fourth module (45) for replacing said entire real-time data (12) entity by using a concealment method;
- a fifth module (46) for controlling said fourth module (45) depending on the output of said second module (46).
